Europäisches Patentamt

European Patent Office

Office européen des brevets

(11) Publication number: **0 599 272 A1**

## EUROPEAN PATENT APPLICATION

(21) Application number: **93118829.6**

(22) Date of filing: **23.11.93**

(51) Int. Cl.5: **G03B 21/10**, G03B 21/62, H04N 9/31

(30) Priority: **25.11.92 JP 315360/92**

(43) Date of publication of application:
**01.06.94 Bulletin 94/22**

(84) Designated Contracting States:
**DE FR GB**

(71) Applicant: **SONY CORPORATION**
**7-35, Kitashinagawa 6-chome**
**Shinagawa-ku**
**Tokyo(JP)**

(72) Inventor: **Nomura, Tsuneharu, c/o Sony**
**Corporation**
**7-35, Kitashinagawa 6-chome,**
**Shinagawa-ku**
**Tokyo(JP)**

(74) Representative: **TER MEER - MÜLLER -**
**STEINMEISTER & PARTNER**
**Mauerkircherstrasse 45**
**D-81679 München (DE)**

(54) Image projector.

(57) An image projector comprises a cathode ray tube (3) having a phosphor screen; a visual screen formed of a fresnel (10) screen and a lenticular (11) screen, the fresnel screen containing fine particles; and at least one reflection member (6) which is opposed to the cathode ray tube for transmitting display light to the visual screen. The above visual screen satisfies the following formulas:
$3 < r < 10 \ \mu m \quad 0.01 < |d| < 0.05$
where r defines a particle size of the fine particles; and d defines a refractive index of the lenticular screen.

FIG. I

## BACKGROUND OF THE INVENTION

### 1. Field of the Invention

The present invention relates to an image projector, and particularly to a screen for an image projector which includes a lenticular screen having a high light transmittance and a wide visual field angle.

### 2. Description of the Related Art

Recently, in the fields of rear type projection televisions and the like, there have been advanced technical developments toward high brightness, wide visual field angle and high contrast.

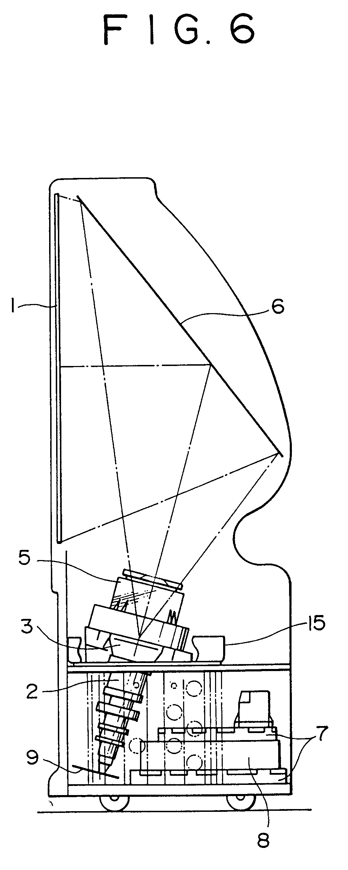

Fig. 6 is a schematic side view of a rear type projection television. As shown in this figure, the rear type projection television is of a type in which an image is projected from the rear side of a screen 1. Specifically, an image taken on a cathode-ray tube (CRT) 3 having a deflection yoke (DY) 2 is projected on the screen 1 through a lens 5 and a mirror 6. The CRT 3 is protected by a CRT bracket 15. Further, this television is provided with a PCB holder 7, a sealed case 8, a C substrate 9 and the like.

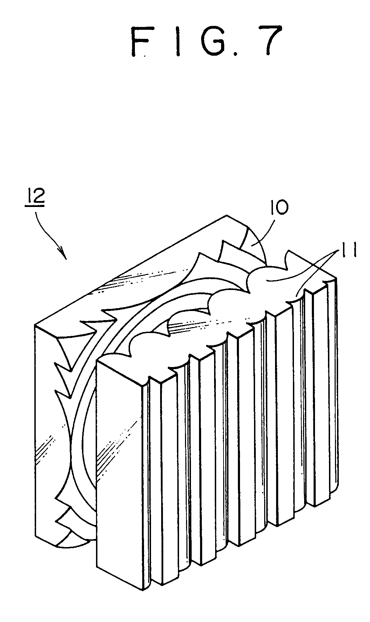

As shown in Fig. 7, a screen 12 for the above rear type projection television (screen for a projector) includes a fresnel screen composed of a fresnel lens 10 on the rear side, and a lenticular screen composed of a lenticular lens 11 on the front side.

Of these two screens, the lenticular screen is so constructed that a plurality of cylindrical lens elements are arranged on a seat-like base in one direction. The projected light is made anisotropic in its luminous intensity distribution by this cylindrical lens. Further, by mixing of fine particles having a particle size of 20 to 500 $\mu$m, the projected light is dispersed in the base line direction of the cylindrical lens. Conventionally, fine particles such as silica, alumina and glass have been used with respect to the screen base material made from plastic.

To achieve the wide visual field angle of the above rear type projection television, there has been known a technique of increasing the amount of the fine particles mixed in the lenticular screen.

However, the amount of the fine particles is contrary to the light transmittance, that is, the light transmittance is reduced with an increase in the amount of the fine particles.

## SUMMARY OF THE INVENTION

Accordingly, an object of the present invention is to provide a screen for an image projector capable of achieving the wide visual field angle which includes a lenticular screen improved in its light transmittance.

To achieve the above object, according to the present invention, there is provided an image projector comprises a cathode ray tube having a phospher screen; a visual screen formed of a fresnel screen and a lenticular screen, the fresnel screen containing fine particles; and at least one reflection member which is opposed to the cathode ray tube for transmitting display light to the visual screen. The above visual screen satisfies the following formulas:

$$3 < r < 10 \ \mu m$$
$$0.01 < |d| < 0.05$$

where r defines a particle size of the fine particles; and d defines a refractive index of the lenticular screen.

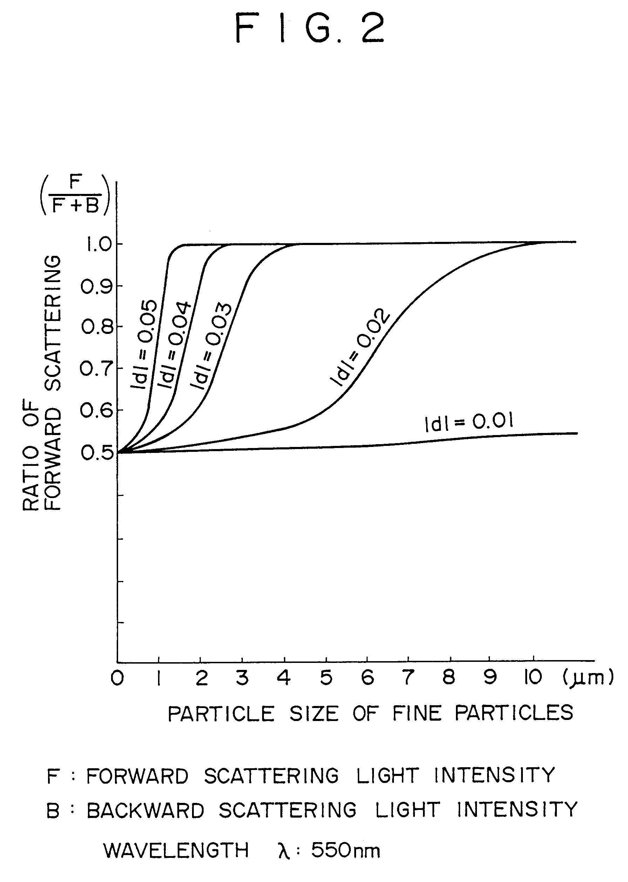

In the present invention, a specified difference in the refractive index is given between the base material of the lenticular screen constituting the screen for an image projector and the fine particles mixed in the screen, and the particle size of the fine particles is specified. Accordingly, as shown in Fig. 2, the forward scattering is increased than the rearward scattering, that is, the light transmittance is improved. This makes it possible to achieve the wide visual field angle of the screen for an image projector.

## BRIEF DESCRIPTION OF THE DRAWINGS

Fig. 1 is a typical sectional view of one embodiment of a screen for an image projector according to the present invention;
Fig. 2 is a view showing a relationship between the particle size of fine particles and the rate of forward scattering;
Fig. 3 is a typical view showing the state of light scattering;
Fig. 4 is an illustrative view showing the characteristic of a screen according to the present invention;
Fig. 5 is an illustrative view showing the characteristic of a screen according to the prior art;
Fig. 6 is a side view of a rear type projection television; and
Fig. 7 is a schematic perspective view showing the construction of a screen for an image projector.

## DETAILED DESCRIPTION OF THE PREFERRED EMBODIMENT

Hereinafter, an embodiment of the present invention will be described with reference to the drawings.

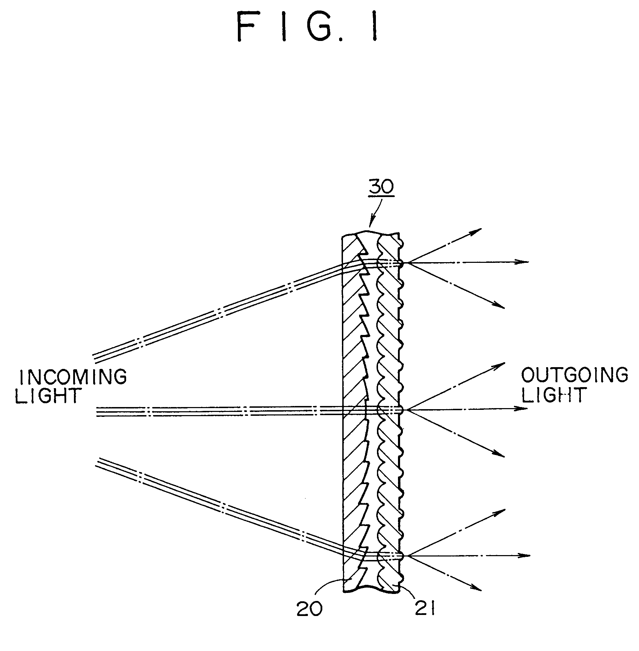

Fig. 1 is a typical sectional view of one embodiment of a screen for an image projector according to the present invention. As shown in this figure, a screen 30 of the present invention includes a fresnel screen 20 and a lenticular screen 21. Fine particles are mixed in the lenticular screen 21. In this screen 30, using a light having a wavelength $\lambda$ of 550nm, there was examined the ratio of the forward scattering $F/(F+B)$ where F is a forward scattering light intensity and B is a rearward scattering light intensity. In this case, the difference in the refractive index between the base material of the screen and the fine particles was taken as d and the particle size r of the fine particles was changed in the range of from 0 to 10 $\mu$m. The results are shown in Fig. 2. As is apparent from this figure, the ratio of the forward scattering is increased under the following requirements:

(1)     $3<r<10\ \mu$m

(2)     $0.01<|d|<0.05$

Additionally, the value of r was selected from the suitable range on the practical use.

In particular, the screen base material and the fine particles satisfying the above requirement (2) comprise an acrylate resin, and an organic compound such as a polyvinylchloride or polyvinylalcohol produced by emulsion polymerization, respectively. Namely, the refractive index of the acrylate resin of the screen base material is 1.49, and the refractive index of the poly(vinylchloride) of the fine particles is 1.46, so that the difference therebetween becomes 0.03.

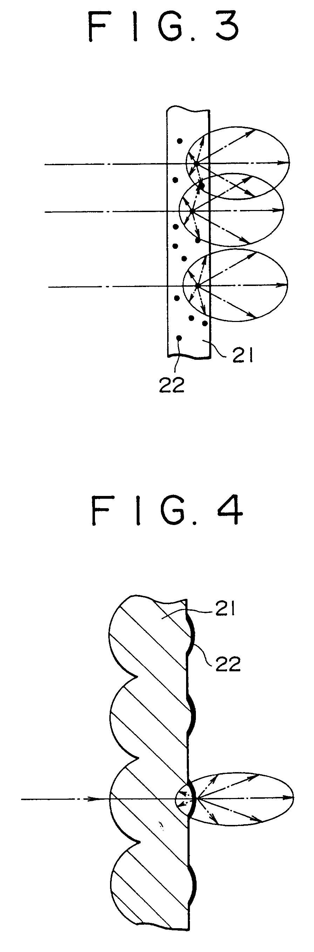

Fig. 3 is a typical view showing the state that a light collides with fine particles 22 having a particle size of 3 to 8 $\mu$ mixed in the lenticular screen 21 and is scattered.

In the case that the screen base material comprises an acrylate resin and the fine particles comprise a vinyl resin, the scattering light intensity is, as shown in Fig. 3, made high on the front side (right side, in the figure), which makes it possible to increase the light transmittance. Namely, there appears a Rayleigh scattering area which is produced when the particle size is smaller than the light wavelength.

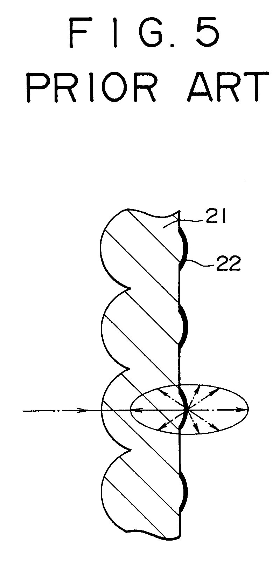

Fig. 4 is a view showing a light scattering characteristic due to fine particles for the lenticular screen according to the present invention; and Fig. 5 is a view showing a light scattering characteristic due to fine particles for a prior art lenticular screen. In Figs. 4 and 5, particles of the fine particles 22 are present only in the vicinity of the outgoing side surface of the lenticular screen. As is apparent from these figures, the lenticular screen according to the present invention is high in the light transmittance. The screen for an image projector of the present invention, therefore, can achieve the wide visual field angle.

As described above, according to the present invention, it is possible to obtain a screen for an image projector having a wide field angle and a high gain.

**Claims**

1.  An image projector comprising:
    a cathode ray tube having a phospher screen;
    a visual screen formed of a fresnel screen and a lenticular screen, said fresnel screen containing fine particles; and
    at least one reflection member which is opposed to said cathode ray tube for transmitting display light to said visual screen.

2.  An image projector according to claim 1, wherein said visual screen satisfies the following formulas:

    $3<r<10\ \mu$m
    $0.01<|d|<0.05$
    where r defines a particle size of said fine particles; and d defines a refractive index of said lenticular screen.

3.  An image projector according to claim 1, wherein said lenticular screen comprises acrylate resin.

4.  An image projector according to claim 1, wherein said fresnel screen comprises vinyl resin.

# F I G. I

INCOMING
LIGHT

OUTGOING
LIGHT

30

20

21

# F I G. 2

F : FORWARD SCATTERING LIGHT INTENSITY

B : BACKWARD SCATTERING LIGHT INTENSITY

WAVELENGTH  $\lambda$ : 550nm

# F I G. 3

21

22

# F I G. 4

21

22

# F I G. 5
# PRIOR ART

# F I G. 6

# F I G. 7

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | US-A-4 919 515 (S.HASEGAWA)<br>* column 1 - column 6; figures 1-4 *<br>--- | 1 | G03B21/10<br>G03B21/62<br>H04N9/31 |
| Y | GB-A-2 111 715 (SONY CORP.)<br>* page 1 - page 3; figures 1-6 *<br>--- | 1 | |
| A | US-A-4 679 900 (T. S. MC.KECHNIE)<br>* column 1 - column 4; figures 1-3 *<br>--- | 2 | |
| A | EP-A-0 193 088 (YUP CO.LTD.)<br>* page 7; figures 7,8 *<br>----- | 3,4 | |
| | | | TECHNICAL FIELDS SEARCHED (Int.Cl.5)<br><br>G03B<br>H04N |

The present search report has been drawn up for all claims

| Place of search | Date of completion of the search | Examiner |
|---|---|---|
| THE HAGUE | 25 February 1994 | Boeykens, J |

EPO FORM 1503 03.82 (P04C01)